**Europäisches Patentamt**

**European Patent Office**

**Office européen des brevets**

(19)

(11) Veröffentlichungsnummer: **0 055 220**

**B1**

(12) **EUROPÄISCHE PATENTSCHRIFT**

(45) Veröffentlichungstag der Patentschrift:
**23.07.86**

(21) Anmeldenummer: **81810506.6**

(22) Anmeldetag: **18.12.81**

(51) Int. Cl.⁴: **B 41 J 5/10**

(54) **Tastaturanordnung.**

(30) Priorität: **19.12.80 CH 9398/80**

(43) Veröffentlichungstag der Anmeldung:
**30.06.82 Patentblatt 82/26**

(45) Bekanntmachung des Hinweises auf die Patenterteilung:
**23.07.86 Patentblatt 86/30**

(84) Benannte Vertragsstaaten:
**AT BE CH DE FR GB IT LI NL SE**

(56) Entgegenhaltungen:
**DE-A-2 218 065**
**DE-B-1 255 117**
**DE-C-577 708**

**ELEKTRONIK, 1978, Heft 5, Franzis-Verlag,
München "Tastatur - ergonomisch", Seite 13**

(73) Patentinhaber: **STANDARD TELEPHON UND
RADIO AG, Friesenbergstrasse 75, CH- 8055 Zürich
(CH)**

(84) Benannte Vertragsstaaten: **CH LI**

(73) Patentinhaber: **International Standard Electric
Corporation, 320 Park Avenue, New York New
York 10022 (US)**

(84) Benannte Vertragsstaaten: **BE DE FR GB IT NL SE AT**

(72) Erfinder: **Frey, Werner U., Dorfstrasse 96, CH- 8800
Thalwil (CH)**
Erfinder: **Rometsch, Johannes, Sandweidstrasse,
CH- 5635 Rickenbach (CH)**
Erfinder: **Diem, Hans, Paulistrasse 2, CH- 8834
Schindellegi (CH)**

(74) Vertreter: **Bucher, Hans F., Laupenstrasse 15, CH-
3008 Bern (CH)**

EP 0 055 220 B1

## Beschreibung

Die vorliegende Erfindung betrifft eine Tastaturanordnung für eine Schreibmaschine oder ein Dateneingabegerät gemäss dem Oberbegriff des ersten Anspruchs.

Dass die übliche Schreibmaschinentastatur weder in ihrer Anordnung der Tasten, fünf oder sechs gerade Zeilen von Tasten, noch in ihrer Zuweisung der einzelnen Zeichen auf die Tasten ideal ist, beweist allein die grosse Anzahl der in den letzten fünfzig Jahren erteilten Patente für neue Tastaturen, die allerdings hauptsächlich die Zuweisung der Zeichen auf die Tasten betreffen, da bei mechanischen Schreibmaschinen und bei elektrischen Schreibmaschinen mit mechanischer Ansteuerung einer andern Anordnung der Tasten als in geraden Zeilen enge Grenzen gesetzt waren. Die bei mechanischen Maschinen übliche Verwendung einer gemeinsamen Achse für alle Tastenhebel verunmöglichte insbesondere auch eine ansich wünschenswerte Anordnung der durch einen Finger zu bedienende Tasten in einer zur Reihe senkrechten Kolonne.

Die weltweite Verbreitung dieser Anordnung und die ebenfalls weltweite Ausbildung von Fachkräften zur Blindbedienung von Schreibmaschinenen führten bis heute zu einer Beibehaltung der Tastaturanordnung und zwar auch bei teilweiser Erweiterung des Tastenfeldes mit Sondertasten, dies obwohl heute insbesondere Dateneingabegeräte rein elektrische Tastaturen aufweisen, die volle Freiheit in der Tastenanordnung und -zuweisung erlauben würden.

Untersuchungen von Fachleuten haben gezeigt, dass die Klagen von Bedienungspersonen, die einen grossen Teil ihrer Arbeitszeit mit der Bedienung einer Tastatur in der Art der heute noch üblichen Schreibmaschinentastatur verbringen, über Beschwerden in Händen, Armen, Schultern und Gelenken in der ergonomisch äusserst ungünstigen Tastatur begründet sind.

Es sind denn auch Anstrengungen in Richtung einer günstigeren Auslegung solcher Tastaturen gemacht worden. So wurde z.B. im US-Patent Nr. 3.990.565 vorgeschlagen, eine übliche Schreibmaschinentastatur über zwei in getrennten, vielseitig verstellbaren Gehäusen untergebrachte Sätze von elektrischen Tastkontakten mit Hilfe von Solenoiden zu betätigen. Abgesehen vom grossen Platzbedarf und Gewicht haftet dieser Lösung der Nachteil an, dass auf diese Weise der Abstand zwischen Bedienungsperson und Schreibsystem derart vergrössert wird, dass optische Hilfen zum Lesen des geschriebenen Textes notwendig sind. Weiter dürfte die grosse Verstellmöglichkeit der Gehäuse zu einer recht langen, persönlichen Erprobungsphase durch die Bedienungsperson führen.

Weiter ist aus der DE-A 2 218 065 eine Tastatur bekannt, bei welcher die übliche Schreibmaschinentastatur in zwei je ungefahr rechteckige Felder aufgeteilt ist, deren Schmalseiten einen sich zur Bedienungsperson hin öffnenden Winkel von ungefähr 60° einschliessen. Diese Anordnung von zwei gegeneinander in derselben Ebene abgewickelten Tastaturfeldern dürfte zur Milderung gewisser der eingangs erwähnten Beschwerden beitragen, insbesondere jener, die von der bei einer üblichen, einteiligen Tastatur nötigen Abwinklung der Hand bezogen auf den Unterarm herrühren.

Aus der DE-C 577 708 ist eine Tastatur bekannt, bei welcher die übliche. Schreibmaschinentastatur in zwei je ungefähr rechteckige Felder aufgeteilt ist, deren Schmalseiten einen sich zur Bedienungsperson hin öffnenden Winkel von 40° einschliessen. Dabei sind die Betätigungsflächen der Tasten jeder Tastenzeile von der Mittellinie zwischen beiden Tastenfeldern nach aussen hin treppenförmig abfallend abgestuft. Weiter sind die einzelnen Tastenzeilen in der bei mechanischen Tastaturen üblichen Art treppenförmig auf unterschiedlicher, von der Bedienungsseite aus ansteigender Höhe angeordnet. Die Mittelpunkte der Betätigungsflächen der einzelnen Tasten liegen dabei auf ergonomisch recht günstig angeordneten schiefen Ebenen, die Betätigung der Tasten erfolgt jedoch wegen der für alle Tastenhebel gemeinsamen Drehachse nicht senkrecht zur jeweils entsprechenden dieser Ebenen, sondern senkrecht zur Auflagefläche der Schreibmaschine. Durch die Aufteilung in zwei Tastenfelder dürften die von der Abwinklung und von der Verdrehung der Hand gegenüber dem Unterarm herrührenden Beschwerden gemildert werden, durch die unnatürliche, von der Senkrechten zur Handfläche abweichenden Betätigungsrichtung der Tasten werden jedoch mit Sicherheit neue Beschwerden eingeführt.

In "Elektronik" 1978, Heft 5 S.13 ist eine Tastatur beschrieben, bei welcher die Tasten einer Schreibmaschine in vier verschiedene Felder aufgeteilt sind, wobei zwei dieser Felder mit je fünf Tasten durch die Daumen und zwei durch die verbleibenden vier Finger zu bedienen sind. Die durch die Daumen zu bedienenden Tasten sind in einer gemeinsamen, zur Auflagefläche der Tastatur geneigten Ebene angeordnet, während die Tasten der beiden durch die übrigen Finger zu bedienenden Tastenfelder in, von der Bedienungsseite gesehen, konkav gewölbten Flächen angeordnet sind, wobei die Tastenhöhen der Länge der sie bedienenden Finger angepasst sind. Weiter scheint eine Handauflage vorhanden zu sein. Diese Tastatur besitzt eine recht grosse Bauhöhe, so dass sie ohne zu starke Anwinkelung der Arme kaum ohne Spezialtisch mit einem Ausschnitt für die Tastatur bedient werden kann, ausser sie werde, wie vom Hersteller vorgeschlagen, zur Bedienung auf den Knien aufgelegt. Weiter bedingt die Zuweisung einer Mehrzahl von Tasten zur Bedienung durch die Daumen eine von der Norm abweichende Zuweisung von Zeichen an die verbleibenden Finger, was, wie eingangs erwähnt, nicht nur Vorteile bringt.

Es ist nun Aufgabe der Erfindung, eine Tastatur vorzusehen, welche möglichst alle der genannten Beschwerden mildert, welche für die gegenwärtig im deutschsprachigen Raum übliche QWERTZ-Tastatur verwendbar ist, sich jedoch nicht auf diese beschränkt, und die Möglichkeit aufweist, dass zusätzliche Tastenfelder, z.B. für Funktionstasten oder numerische Eingaben, vorgesehen werden können. Weiter soll die Tastatur auf einem normalen Tisch von geeigneter Höhe, aber ohne besondere Ausschnitte verwendbar sein.

Gelöst wird diese Aufgabe durch die im Kennzeichen des ersten Anspruchs genannten Merkmale. Vorteilhafte Weiterbildungen der Erfindung können den abhängigen Ansprüchen entnommen werden.

Ein Ausführungsbeispiel der Erfindung wird nun anhand der Zeichnung näher erläutert. In der Zeichnung zeigt:

Die Fig. 1 eine perspektivische Darstellung einer erfindungsgemässen Tastaturanordnung; und

die Fig. 2, 3 und 4 die Tastaturanordnung nach Fig.1 im Aufriss, Grundriss und Seitenriss.

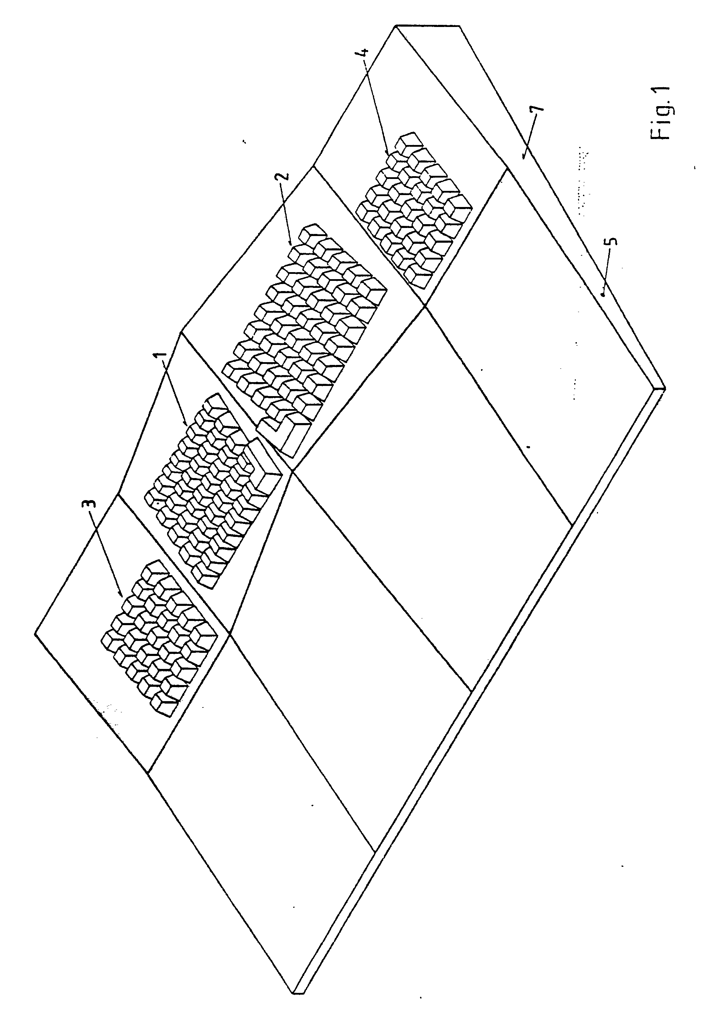

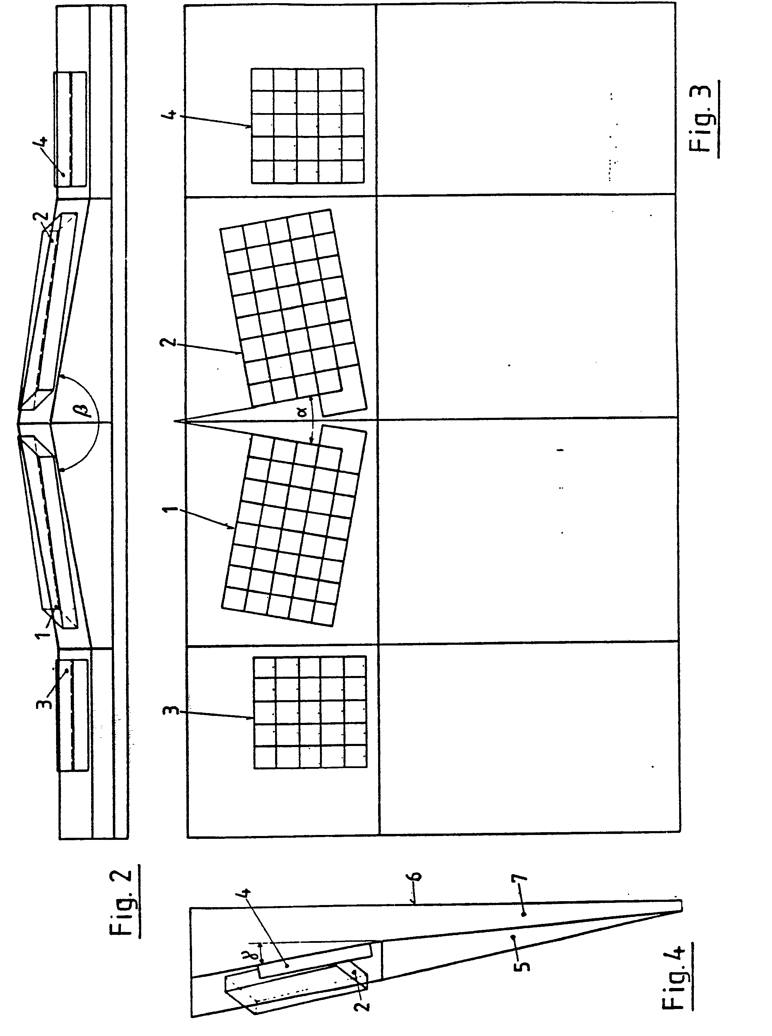

Die Fig. 1 bis 4 zeigen eine Tastaturanordnung mit vier einzelnen Tastenfeldern 1, 2, 3 und 4, von denen jedes eine Anzahl von Tasten aufweist, die über ein nichtgezeigtes Kabel ein elektrisches Signal an eine Schreibmaschine oder ein Dateneingabegerät abgeben. Die Tastenfelder 1 bis 4 sind in einer Unterlage 5 eingebaut, welche gegen die Bedienungsperson hin eine keilförmige Verlängerung 7 aufweist. Die Tastenfelder 1 bzw. 2 erhalten mit Vorteil die üblichen, alphanumerischen Tasten einschliesslich der Funktionstasten einer Schreibmaschine, welche Tasten durch die linke bzw. rechte Hand zu betätigen sind. Die Tastenfelder 3 und 4 können die Tasten für eine Rechenmaschine und/oder die Funktionstasten z.B. bei einem Dateneingabegerät oder bei einem Textverarbeitungsgerät sein.

Statt der oben erwähnten vierteiligen Tastaturanordnung sind in analoger Art auch andere Tastaturen möglich. So könnte eine reine Schreibmaschinentastatur zweiteilig sein und nur die Tastenfelder 1 und 2 mit ihren Verlängerungen aufweisen. Weiter wäre eine dreiteilige Ausführung mit einem Zusatztastenfeld links oder rechts möglich. Ferner wäre es auch denkbar, bei einer vierteiligen Ausführung die beiden Tastenfelder 3 und 4 mit den gleichen Tasten zu be7egen, um bei gleicher Tastaturanordnung Links- und Rechtshänder gleiche Möglichkeiten zu bieten.

Wie aus den Figuren ersichtlich ist, sind die Tasten innerhalb eines Tastenfeldes nicht nur in Zeilen, wie dies bei den herkömmlichen Tastaturen ebenfalls üblich ist, geordnet, sondern auch in zu den Zeilen senkrechten Kolonnen, was das Erreichen der einem einzelnen Finger zugeordneten Tasten erleichtert und zudem einen preisgünstigen Aufbau des Tastenfeldes erlaubt. Natürlich wären auch andere Anordnungen der einzelnen Tasten möglich, z.B. in bogenförmigen Zeilen, wobei dann die konkave Seite der Bogen gegen die Bedienungsperson länge. Dadurch ergäbe sich eine bessere Anpassung an die unterschiedliche Länge der Finger. Bei konstanter Durchführung dieses Prinzips würden sich allerdings unterschiedliche Abstände der Tasten in den verschiedenen Zeilen ergeben.

Ebenso ist aus der Zeichnung ersichtlich, dass die Richtungen der Kolonnen des Tastenfeldes 1 mit jenen des Tastenfeldes 2 einen Oeffnungswinkel α von ungefähr 20° c einschliessen. Weiter sind die Ebenen der Tastenfelder 1 und 2 gegen aussen abfallend und schliessen einer Lateralwinkel β von ungefähr 165° C ein, welcher Winkel sich gegen die Auflagefläche 6 hin öffnet. Weiter sind alle vier Tastenfelder in gegenüber der Horizontalen unter einem Frontwinkel γ von ungefähr 10° C von der Bedienungsperson weg ansteigenden Ebenen angeordnet.

Wie bereits erwähnt, erstreckt sich eine keilförmige Verlängerung 7 von den Tastenfeldern weg in Richtung Bedienungsperson. Diese Verlängerung dient als Auflage für die Arme. Da bei Vorhandensein einer Armauflage die Betätigung einer Taste nur mehr durch eine Handgelenk- und/oder Fingerbewegung erfolgt, muss die für die Betätigung einer Taste notwendige Kraft kleiner sein als bei einer Tastatur ohne Armauflage, da im letzteren Fall der Arm bei der Tastenbetätigung mithilft. Die Betätigungskraft kann aber ohne Nachteil kleiner sein als üblich, da die Finger in Ruhelage wegen der Hand- oder Armauflage nicht mehr auf den Tasten aufliegen und somit ungewollte Tastenbetätigungen nicht durch eine relativ hohe nötige Betätigungskraft verhindert werden müssen.

Die Tiefe der Armauflage ergibt sich aus der Bauhöhe der Tasten und dem gewählten Neigungswinkel, welcher mit Vorteil ungefähr gleich dem Frontwinkel γ gewählt wird. Es wäre bei Verwendung von sogenannten Kurzhubtasten mit geringer Bauhöhe ohne weiteres möglich, dieses Prinzip beizuhalten, wobei dann der die Tastatur tragende Tisch teilweise die Funktion der Armauflage übernähme.

Die bereits erwähnte gegenseitige Verdrehung der beiden Tastenfelder 1 und 2 um den Oeffnungswinkel α bewirkt, dass die Hände im Gegensatz zur einteiligen Tastatur nicht mehr so stark abgewinkelt werden müssen in Bezug auf die Längsachse des Unterarms, wie dies auch bereits in der erwähnten DE-A 2 218 085 beschrieben wurde.

Der gewählte Lateralwinkel β von zirka 185 stellt einen guten Kompromiss dar. Zwar wäre bei einer senkrechten Anordnung der Tastenfelder 1 und 2 in einem Abstand Rücken gegen Rücken überhaupt keine Verdrehung des Unterarms mehr vorhanden, dafür müsste aber die Hand eine Schwenkbewegung in einer senkrechten Ebene ausführen, was, wie Versuche gezeigt haben, zu wesentlich schlechteren Resultaten führt als eine mässige Verdrehung des Unterarms. Zudem würde eine solche Anordnung jede Sichtbedienung der Tastaturen ausschliessen, was insbesondere bei vorübergehender Zuweisung von Sonderzeichen für einzelne oder alle Tasten nicht zulässig ist. Ferner würde eine solche senkrechte Anordnung eine unzulässig grosse Bauhöhe der Tastatur ergeben.

Bei den Tastenfeldern 3 und 4, welche weniger haufig verwendete Funktionstasten und/oder numerische Tasten enthalten, kann im Interesse einer geringen Bauhöhe auf eine nach aussen auffallende Anordnung verzichtet werden. Ebenfalls wird auf eine Schrägstellung bezüglich der Querachse der Tastaturanordnung verzichtet. Der letztere Verzicht ist deshalb gerechtfertigt, weil wegen des relativ grossen Abstandes dieser Tastenfelder von der Trennlinie der Tastenfelder 1 und 2 die Hände ohnehin gegenüber der Längsachse des Unterarms kaum abgewinkelt werden müssen.

Die Tastenfelder können mit Tasten irgendwelcher Bauart ausgerüstet sein, Bedingung ist lediglich, dass bei Betätigung einer Taste ein elektrisch auswertbares und übertragbares Signal entsteht. Ebenso ist es möglich, ein Tastenfeld nicht aus einzelnen Tasten aufzubauen, sondern als integriertes Tastenfeld auszulegen.

Die Tastenfelder können als Stufentastaturen oder als Flachtastaturen ausgebildet sein, d.h. die Griffmulden der Tastenköpfe der einzelnen Tastenzeilen eines Tastenfeldes können entweder in zur Auflagefläche des betreffenden Tastenfeldes parallelen Ebenen liegen, wobei jede Zeile von Tasten eine andere Höhenlage aufweist oder die Griffmulden aller Tasten können in einer einzigen gemeinsamen, zur Auflagefläche des betreffenden Tastenfeldes parallelen Ebene liegen. Die unterschiedliche Ausbildung als Stufentastatur oder als Flachtastatur kann durch unterschiedliche Ausbildung der Tastenstössel oder Tastenköpfe erreicht werden, wobei bei beiden Ausführungsformen der Tastatur für die ganze Tastatur, ggf. mit Ausnahme gewissen Funktionstasten, die gleiche Kopfform verwendet werden kann, was die Beschaffung und den Ersatz von Tastenköpfen wesentlich erleichtert.

**Patentansprüche**

1 Tastaturanordnung für eine Schreibmaschine oder ein Dateneingabegerät mit in Tastenfelder aufgeteilter Tastatur, wobei jedes Tastenfeld eine Anzahl von Tasten aufweist und mindestens zwei Tastenfelder (1, 2) so zueinander gestellt sind, dass sich die Kolonnenrichtungen der beiden Tastenfelder unter einem sich zur Bedienungsseite hin öffnenden Öffnungswinkel α schneiden, dass zwischen den Tastenfeldern ein freies Feld in der Gestalt eines gleichschenkligen Trapezes verbleibt, dessen obere Kante nicht wesentlich langer als der Tastenabstand innerhalb der Tastenzeilen ist, und dass die Mittelpunkte der Betätigungsflächen der Tasten der Tastenzeilen eine sich von der Mittellinie zwischen den beiden Tastenfeldern nach aussen hin und von der von der Bedienungsseite am weitesten entfernten zu dieser am nächsten liegenden Tastenzeile abnehmende Höhe über einer Auflagefläche der Tastaturanordnung aufweisen und in zwei zueinander schiefen Ebenen liegen, welche Ebenen sich auf einer Senkrechten zur bedienungsseitigen Kante des Untersatzes (5) unter einem sich zur Auflagefläche (6) hin öffnenden Lateralwinkel schneiden, dass die Verlängerung der resultierenden Schnittgeraden eine zur Auflagefläche (6) parallele Ebene unter einem sich zur der Bedienungsseite abgewandten Seite hin öffnenden Frontwinkel γ durchstösst, dadurch gekennzeichnet, dass die Tastenfelder (1 - 4) in einem auf eine ebene Fläche auflegbaren Untersatz (5) mit im wesentlichen rechteckiger Auflagegrundfläche (6) eingebaut sind, und dass der die Tastenfelder enthaltende Untersatz (5) eine Verlängerung (7) zur Bedienungsseite aufweist, die als Armauflage verwendbar ist.

2. Anordnung nach Anspruch 1, dadurch gekennzeichnet, dass der Öffnungswinkel α Werte zwischen 5°C und 30°C aufweist, dass der Lateralwinkel β Werte zwischen 180° und 140° aufweist, und dass der Frontwinkel γ Werte zwischen 0° und 15° aufweist.

3. Anordnung nach Anspruch 2, dadurch gekennzeichnet, dass anschliessend an die genannten Tastenfelder (1, 2) mindestens ein weiteres Tastenfeld (3, 4) mit in Zeilen und Kolonnen angeordneten Tasten vorhanden ist, dass das zusätzliche Tastenfeld in einer Ebene liegt, welche die zur Auflagefläche (6) parallele Ebene unter dem sich zur der Bedienungsseite abgewandte Seite hin öffnenden Frontwinkel γ mit einer zur bedienungsseitigen Kante des Untersatzes (5) parallelen Schnittgeraden schneidet, und dass die Zeilenrichtung der Tasten des zusätzlichen Tastenfeldes parallel zur bedienungsseitigen Kante des Untersatzes (5) verläuft.

4. Anordnung nach Anspruch 3, dadurch gekennzeichnet, dass beidseits der genannten Tastenfelder (1, 2) je ein weiteres Tastenfeld (3,4) mit in Zeilen und Kolonnen angeordneten Tasten vorhanden ist.

5. Anordnung nach Anspruch 2, dadurch gekennzeichnet, dass die zwei nebeneinanderliegenden Tastenfelder (1, 2) die alphanumerischen und Funktionstasten einer Schreibmaschine enthalten. nebeneinanderliegenden Tastenfelder (1, 2) die alphanumerischen Tasten eines Dateneingabegerätes enthalten, und dass auf einer oder beiden Seiten dieser Tastenfelder ein oder je ein weiteres Tastenfeld (3, 4) vorhanden ist, das numerische Tasten und/oder Funktionstasten enthält.

## Claims

1. Keyboard arrangement for a typewriter or a data input device comprising a keyboard subdivided into keyfields, each keyfield having a plurality of keys and at least two keyfields (1, 2) being disposed with respect to each other in such a manner that the directions of the columns of the two keyfields intersect each other at an aperture angle α open towards the keyboard operator side, that between the keyfields there is left an open field having the shape of an isosceles trapezoid the length of the upper edge of which has no appreciable difference to the spacing of the keys within a key row, and that the centres of the operating surfaces of the keys of the key rows have a height above a basal surface of the keyboard arrangement decreasing from the median line between the two keyfields outwards and from the key row farthest away from the operator side to that being nearest thereto and are disposed in two perpendicular to the operator-side edge of the support (5) at a lateral angle β open towards said basal surface (6), that the extension of the resulting intersection line intersects a plane parallel to said basal surface (6) at a front angle γ open towards an edge of said support opposite said operator-side edge, characterized in that the keyfields (1 - 4) are arranged on a support (5) settable on a plane surface and having a substantially rectangular basal surface (6), and that the support (5) containing the key fields is provided with an extension (7) toward the operator's side usable as an arm rest.

2. Arrangement according to claim 1, characterized in that the aperture angle α has a value disposed between 5°C and 30°C, that the lateral angle β has a value disposed between l8O°C and 140°C, and that the front angle γ has a value disposed between 0°C and 15°C.

3. Arrangement according to claim 2, characterized in that adjacent to said keyfields (1, 2) there is provided at least one further keyfield (3, 4) including keys arranged in rows and columns, that the additional keyfield is located in a plane intersecting the plane parallel to said basal plane (6) at the front angle γ open towards the side opposite the operator side with an intersecting line being parallel to the operator-side edge of the support (5), and that the direction of the rows of the keys of the additional keyfield is parallel to the operator-side edge of the support (5).

4. Arrangement according to claim 3, characterized in that on either side of said keyfields (1, 2) there is provided one of said further keyfields (3, 4) including keys arranged in rows and columns.

5. Arrangement according to claim 2, characterized in that the two adjacent keyfields (1, 2) include the alphanumeric and functional keys of a typewriter.

6. Arrangement according to claim 2, characterized in that the two adjacent keyfields (1, 2) include the alphanumeric keys of a data input device, and that at one or either side of said keyfields there is/are provided a further keyfield (3, 4) including numerical and/or function keys.

## Revendications

1. Agencement de clavier pour machine à écrire ou dispositif d'entrée de données incluant un clavier subdivisé en champs de touches, chaque champ de touches comprenant un certain nombre de touches et au moins deux champs de touches (1, 2) étant disposés l'un par rapport à l'autre de manière que les directions des colonnes des deux champs de touches se coupent avec un angie d'ouverture α s'ouvrant vers le côté de l'utilisateur. que, entre les deux champs de touches, se trouve un champ libre en forme de trapèze isocele, dont le côté supérieur n'est pas substantiellement plus grand que la distance entre les touches dans une rangée de touches, et que le point central de la surface d'actionnement des touches des rangées de touches présente une hauteur décroissante par rapport à une surface de base de l'arrangement de clavier, depuis la ligne médiane entre les deux champs de touches et vers l'extérieur, et depuis la rangée de touche la plus éloignée du côté de l'utilisateur vers celle qui en est la plus proche, et étant aménagés dans deux plans inclinés l'un vers l'autre qui se coupent sur une ligne perpendiculaire au bord proche de l'utilisateur d'un support (5) sous un angle latéral s'ouvrant vers la surface de base (6), le prolongement de la ligne d'intersection résultante traversant un plan parallèle à la surface de base (6) sous un angle frontal γ s'ouvrant à l'opposé du côté de l'utilisateur, caractérisé en ce que les champs de touches (1-4) sont aménagés dans un support (5) pouvant être disposé sur une surface plane, par une surface de base sensiblement rectangulaire, et en ce que le support (5) contenant les champs de touches présente un prolongement (7) vers le côté de l'utilisateur pouvant servir d'appui.

2. Agencement de clavier selon la revendication 1, caractérisé en ce que l'angle d'ouverture α a une valeur comprise entre 5° et 30°, l'angle latéral β une valeur comprise entré 180° et 140° et l'angle frontal γ une valeur comprise entre 0 et 15°.

3. Agencement de clavier selon la revendication 2, caractérisé en ce que, à côté des deux champs de touches mentionnés (1, 2), il est prévu au moins un autre champ de touches comprenant des touches disposées en rangées et colonnes ce champ de touches additionnel étant aménage dans un plan qui coupe un plan parallèle au plan de base (6) sous l'angle frontal γ s'ouvrant à l'opposé du côté de l'utilisateur, la ligne d'intersection étant parallèle au bord du support (5) parallèle au côté de l'utilisateur, tandis que la direction des rangées de touches de ce champ de touches additionnel est parallèle au bord du support (5) parallèle au côté de l'utilisateur.

4. Agencement de clavier selon la revendication 3, caractérisé en ce qu'un champ de touches

**0 055 220**

additionnel (3, 4) est prévu de chaque côté des champs de touches (1, 2) préalablement mentionnés, et comporte des touches disposées en rangées et en colonnes.

5. Agencement de clavier selon la revendication 2, caractérisé en ce que les deux champs de touches adjacénts (1, 2) contiennent les touches alphanumériques et les touches de fonction d'une machine à écrire.

6. Agencement de clavier selon la revendication 2, caractérisé en ce que les deux champs de touches adjacents (1, 2) contiennent les touches alphanumériques d'un dispositif d'entrée de données et en ce qu'au moins d'un côté de ces champs de touches, un autre champ de touche est prévu, qui contient des touches numériques et/ou des touches de fonction.

Fig.1

Fig. 2

β

3    1    2    4

Fig. 4

δ
4
2
6
5    7
3

3    1    2    4

α

0 055 220

Fig. 3